# EUROPEAN PATENT SPECIFICATION

(11) **EP 4 040 813 B1**
(45) Date of publication and mention of the grant of the patent: **22.05.2024**
(21) Application number: 20884071.0
(22) Date of filing: 23.10.2020
(51) Int. Cl.: H04W 72/00, H04W 76/10, H04W 4/08, H04W 76/11, H04W 76/22, H04W 76/40

(54) **COMMUNICATION METHOD, DEVICE AND APPARATUS**
KOMMUNIKATIONSVERFAHREN, VORRICHTUNG UND GERÄT
PROCÉDÉ, DISPOSITIF ET APPAREIL DE COMMUNICATION

(30) Priority: 07.11.2019 CN 201911084273
(43) Date of publication of application: 10.08.2022
(73) Proprietor: Huawei Technologies Co., Ltd., Shenzhen, Guangdong 518129 (CN)
(72) Inventor: ZONG, Zaifeng, Shenzhen, Guangdong 518129 (CN); ZHU, Fenqin, Shenzhen, Guangdong 518129 (CN)
(74) Representative: Maiwald GmbH
(86) International application number: PCT/CN2020/123090
(87) International publication number: WO 2021/088660

(56) References cited:
- WO-A1-2018/076966
- CN-A- 101 132 607
- CN-A- 102 291 679
- CN-A- 102 843 650
- CN-A- 105 472 548
- CN-A- 106 488 409
- CN-A- 110 235 514
- US-A1- 2019 098 692
- US-A1- 2019 223 250

## Description

### TECHNICAL FIELD

This application relates to the field of communications technologies, and in particular, to a communications method and apparatus.

### BACKGROUND

With development of the mobile Internet, many services (for example, a video viewing service and a video call service) occupy a relatively large quantity of network resources.

US2019/098692A1 describes that a request message for changing one or more media for an MCVideo call may be transmitted from a wireless device to n MCVideo application function (AF). It is described that a DIAMETER AA-request (AAR) command may be received by a policy and charging rules function (PCRF) from the MCVideo AF. It is described that the DIAMETER AAR command may comprise: a modification bearer message; and an application identifier attribute-value pairs (AVP) corresponding to the MCVideo call. It is described that an implementation message may be transmitted from the PCRF to a policy and charging enforcement function (PCEF). It is described that the implementation message may comprise an updated Quality of Service (QoS). The PCEF may implement the updated QoS for the MCVideo call. It is described that the updated QoS may: comprise QoS data bearer modification information; and depend on a change in a radio network coverage.

US2019/223250A1 describes methods and Systems for modifying or releasing a Multicast/Broadcast (MB) session for delivery of MB Data to a plurality of Electronic Devices (EDs) connected to a (Radio) Access Network (R)AN node. It is described that the method includes receiving one or more triggers, and instructing the various network functions and (R)AN nodes to modify (or release) the MB session dependent on the received trigger.

Currently, when transmitting various service data to a terminal device, a network device usually sends the service data to the terminal device in a unicast manner. When a service occupies a relatively large quantity of network resources, a relatively large quantity of network resources needs to be consumed when the network device transmits data of the service to the terminal device, causing low resource utilization.

### SUMMARY

Embodiments of this application provide a communications method and apparatus and a device, to improve resource utilization.

Appended claim 1 defines a communications method. Appended Claim 6 defines a communications apparatus. Appended claim 7 defines a computer-readable storage medium. The invention and its scope of protection is defined by these independent claims. The following aspects and implementations provide examples of how technical subject matters can be combined.

According to a first aspect, an embodiment of this application provides a communications method. The method may include: A base station receives update information of a multicast session, and the base station sends, based on the update information, radio bearer information to a terminal device that joins the multicast session, where the radio bearer information is used by the terminal device to receive data of the multicast session.

In the foregoing process, a network device may send the update information of the multicast session to the base station, and the base station sends, based on the update information of the multicast session, the radio bearer information to the terminal device that joins the multicast session, so that the terminal device that joins the multicast session can obtain, in a timely manner, latest radio bearer information corresponding to the multicast session, and the terminal device can obtain service data from a network side in a multicast manner based on the latest radio bearer information, thereby improving resource utilization.

In a possible implementation, the method further includes:
the base station learns, based on a context of the multicast session, of the terminal device that joins the multicast session.

The context of the multicast session includes information about the terminal device that joins the multicast session. Therefore, the base station can learn of a specific terminal device that joints the multicast session, and can send the latest radio bearer information to the terminal device, so that the terminal device can obtain the service data from the network side in a multicast manner based on the latest radio bearer information, thereby improving resource utilization.

In a possible implementation, the update information includes one or more of the following information:
QoS information of a multicast quality of service QoS flow newly added to the multicast session and an identifier of the newly added multicast QoS flow; or
an identifier of a multicast QoS flow deleted from the multicast session; or
QoS information of an updated multicast QoS flow in the multicast session and an identifier of the updated multicast QoS flow.

In a possible implementation, the radio bearer information includes at least one of the following information:
configuration information of a newly added radio bearer; or
an identifier of a deleted radio bearer; or
configuration information of a modified radio bearer.

In a possible implementation, the configuration information of the newly added radio bearer includes an identifier of the newly added radio bearer and an identifier of a QoS flow mapped to the newly added radio bearer.

In a possible implementation, the configuration information of the modified radio bearer includes an identifier of the modified radio bearer and an identifier of a QoS flow mapped to the modified radio bearer.

In a possible implementation, when the update information includes the QoS information of the multicast QoS flow newly added to the multicast session and the identifier of the newly added multicast QoS flow, the radio bearer information includes the configuration information of the newly added radio bearer and/or the configuration information of the modified radio bearer.

In a possible implementation, when the update information includes the identifier of the multicast QoS flow deleted from the multicast session, the radio bearer information includes the identifier of the deleted radio bearer and/or the configuration information of the modified radio bearer.

In a possible implementation, when the update information includes the QoS information of the updated multicast QoS flow in the multicast session and the identifier of the updated multicast QoS flow, the radio bearer information includes at least one of the configuration information of the newly added radio bearer, the identifier of the deleted radio bearer, or the configuration information of the modified radio bearer.

In a possible implementation, that the base station sends radio bearer information to a terminal device based on the update information includes:
the base station determines a context of the terminal device based on an identifier of the terminal device that joins the multicast session; and
the base station sends the radio bearer information to the terminal device based on the context of the terminal device and the update information.

In the foregoing process, the base station sends the latest radio bearer information to the terminal device based on the context of the terminal device, to prevent the base station from sending the radio bearer information by using a dedicated broadcast channel, and also prevent the terminal device from reading the dedicated broadcast channel to obtain the radio bearer information, so that the terminal device and the base station do not need to support the dedicated broadcast channel, thereby simplify design of the terminal device and the base station.

In a possible implementation, the method further includes:
the base station sends, to a session management function SMF network element, indication information used to indicate that the multicast session is successfully updated or indication information used to indicate that the multicast session of the terminal device fails to be updated.

In the foregoing process, the SMF network element may learn, based on the indication information, whether the terminal device can access an updated multicast session, and therefore can charge the terminal device based on the indication information, to avoid erroneous charging.

According to a second aspect, an embodiment of this application provides a communications method. The method includes: A network device receives an updated policy and charging control PCC rule of a multicast service, and the network device sends, to a first base station corresponding to a first multicast session of the multicast service, update information of the first multicast session based on the updated PCC rule.

In the foregoing process, after a PCC rule of the multicast service is updated, the network device may send update information of a multicast session of the multicast service to a base station, so that the base station sends, based on the update information of the multicast session, radio bearer information to a terminal device that joins the multicast session, the terminal device that joins the multicast session can obtain, in a timely manner, latest radio bearer information corresponding to the multicast session, and the terminal device can obtain service data from a network side in a multicast manner based on the latest radio bearer information, thereby improving resource utilization.

In a possible implementation, the first multicast session corresponds to a plurality of base stations, the plurality of base stations further include a second base station, and the method further includes: The network device sends the update information of the first multicast session to the second base station.

In the foregoing process, one multicast session corresponds to a plurality of base stations, to prevent the network device from separately establishing different multicast sessions for all base stations and all multicast services, thereby preventing the network device from managing an excessively large quantity of multicast sessions.

In a possible implementation, the update information includes at least one of the following information:
QoS information of a multicast quality of service QoS flow newly added to the first multicast session and an identifier of the newly added multicast QoS flow; or
an identifier of a multicast QoS flow deleted from the first multicast session; or
QoS information of an updated multicast QoS flow in the first multicast session and an identifier of the updated multicast QoS flow.

In a possible implementation, that a network device receives an updated PCC rule of a multicast service includes:
the network device receives the updated PCC rule by using a first policy session corresponding to the first multicast session.

In a possible implementation, the network device is a session management function SMF network element, and the network device may receive the updated PCC rule of the multicast service in the following manner: The network device receives the updated PCC rule by using a second policy session, where the second policy session corresponds to a protocol data unit PDU session of a terminal device, and the terminal device joins the first multicast session. Correspondingly, the network device further determines, based on the PDU session, the first base station corresponding to the first multicast session.

In a possible implementation, that a network device receives an updated PCC rule of a multicast service includes:
the network device receives the updated PCC rule by using a third policy session, where the third policy session corresponds to a multicast session of the multicast service, and the multicast session includes the first multicast session.

In a possible implementation, the multicast session of the multicast service further includes a second multicast session, and the method further includes: the network device sends update information of the second multicast session to a third base station corresponding to the second multicast session.

In a possible implementation, the network device is an SMF network element or a multicast control function MCF network element.

In a possible implementation, the method further includes:
the network device receives, from the first base station, indication information used to indicate that the first multicast session is successfully updated or indication information used to indicate that the first multicast session fails to be updated.

In the foregoing process, the network device may learn of an update status of the multicast session based on the indication information, and may further determine, based on the update status of the multicast session, how to charge the multicast session, to avoid erroneous charging.

According to a third aspect, an embodiment of this application provides a communications apparatus, including a receiving module and a sending module.

The receiving module is configured to receive update information of a multicast session.

The sending module is configured to send, based on the update information, radio bearer information to a terminal device that joins the multicast session, where the radio bearer information is used by the terminal device to receive data of the multicast session.

In a possible implementation, the apparatus further includes a processing module.

The processing module is configured to learn, based on a context of the multicast session, of the terminal device that joins the multicast session.

In a possible implementation, the update information includes one or more of the following information:
QoS information of a multicast quality of service QoS flow newly added to the multicast session and an identifier of the newly added multicast QoS flow; or
an identifier of a multicast QoS flow deleted from the multicast session; or
QoS information of an updated multicast QoS flow in the multicast session and an identifier of the updated multicast QoS flow.

In a possible implementation, the radio bearer information includes at least one of the following information:
configuration information of a newly added radio bearer; or
an identifier of a deleted radio bearer; or
configuration information of a modified radio bearer.

In a possible implementation, the configuration information of the newly added radio bearer includes an identifier of the newly added radio bearer and an identifier of a QoS flow mapped to the newly added radio bearer.

In a possible implementation, the configuration information of the modified radio bearer includes an identifier of the modified radio bearer and an identifier of a QoS flow mapped to the modified radio bearer.

In a possible implementation, when the update information includes the QoS information of the multicast QoS flow newly added to the multicast session and the identifier of the newly added multicast QoS flow, the radio bearer information includes the configuration information of the newly added radio bearer and/or the configuration information of the modified radio bearer.

In a possible implementation, when the update information includes the identifier of the multicast QoS flow deleted from the multicast session, the radio bearer information includes the identifier of the deleted radio bearer and/or the configuration information of the modified radio bearer.

In a possible implementation, when the update information includes the QoS information of the updated multicast QoS flow in the multicast session and the identifier of the updated multicast QoS flow, the radio bearer information includes at least one of the configuration information of the newly added radio bearer, the identifier of the deleted radio bearer, or the configuration information of the modified radio bearer.

In a possible implementation, the processing module is further configured to determine a context of the terminal device based on an identifier of the terminal device that joins the multicast session.

The sending module is further configured to send the radio bearer information to the terminal device based on the context of the terminal device and the update information.

In a possible implementation, the sending module is further configured to send, to a session management function SMF network element, indication information used to indicate that the multicast session is successfully updated or indication information used to indicate that the multicast session of the terminal device fails to be updated.

According to a fourth aspect, an embodiment of this application provides a communications apparatus, including a receiving module and a sending module.

The receiving module is configured to receive an updated policy and charging control PCC rule of a multicast service.

The sending module is configured to send, to a first base station corresponding to a first multicast session of the multicast service, update information of the first multicast session based on the updated PCC rule.

In a possible implementation, the first multicast session corresponds to a plurality of base stations, the plurality of base stations further include a second base station, and the sending module is further configured to send the update information of the first multicast session to the second base station.

In a possible implementation, the update information includes at least one of the following information:
QoS information of a multicast quality of service QoS flow newly added to the first multicast session and an identifier of the newly added multicast QoS flow; or
an identifier of a multicast QoS flow deleted from the first multicast session; or
QoS information of an updated multicast QoS flow in the first multicast session and an identifier of the updated multicast QoS flow.

In a possible implementation, the receiving module is specifically configured to:
receive the updated PCC rule by using a first policy session corresponding to the first multicast session.

In a possible implementation, the apparatus further includes a processing module, and the apparatus is a session management function SMF network element.

The receiving module is further configured to receive the updated PCC rule by using a second policy session, where the second policy session corresponds to a protocol data unit PDU session of a terminal device, and the terminal device joins the first multicast session.

The processing module is configured to determine, based on the PDU session, the first base station corresponding to the first multicast session.

In a possible implementation, the receiving module is specifically configured to receive the updated PCC rule by using a third policy session, where the third policy session corresponds to a multicast session of the multicast service, and the multicast session includes the first multicast session.

In a possible implementation, the multicast session of the multicast service further includes a second multicast session, and the sending module is further configured to send update information of the second multicast session to a third base station corresponding to the second multicast session.

In a possible implementation, the communications apparatus is located in a network device, and the network device is an SMF network element or a multicast control function MCF network element.

In a possible implementation, the receiving module is further configured to receive, from the first base station, indication information used to indicate that the first multicast session is successfully updated or indication information used to indicate that the first multicast session fails to be updated.

According to a fifth aspect, an embodiment of this application provides a communications apparatus, including a memory and a processor. The processor executes program instructions in the memory, to implement the communications method according to any possible implementation of the first aspect.

According to a sixth aspect, an embodiment of this application provides a communications apparatus, including a memory and a processor. The processor executes program instructions in the memory, to implement the communications method according to any possible implementation of the second aspect.

According to a seventh aspect, an embodiment of this application provides a storage medium. The storage medium is configured to store a computer program. When executed by a computer or a processor, the computer program is used to implement the communications method according to any possible implementation of the first aspect.

According to an eighth aspect, an embodiment of this application provides a storage medium. The storage medium is configured to store a computer program. When executed by a computer or a processor, the computer program is used to implement the communications method according to any possible implementation of the second aspect.

According to a ninth aspect, an embodiment of this application provides a computer program product. The computer program product includes instructions; and when the instructions are executed, a computer is enabled to perform the communications method according to any possible implementation of the first aspect.

According to a tenth aspect, an embodiment of this application provides a computer program product. The computer program product includes instructions; and when the instructions are executed, a computer is enabled to perform the communications method according to any possible implementation of the second aspect.

According to an eleventh aspect, an embodiment of this application provides a system-on-a-chip or system chip. The system-on-a-chip or system chip may be applied to a base station. The system-on-a-chip or system chip includes at least one communications interface, at least one processor, and at least one memory. The communications interface, the memory, and the processor are interconnected by using a bus. The processor executes instructions stored in the memory, so that the base station can perform the communications method according to any possible implementation of the first aspect of this application.

According to a twelfth aspect, an embodiment of this application provides a system-on-a-chip or system chip. The system-on-a-chip or system chip may be applied to a network device. The system-on-a-chip or system chip includes at least one communications interface, at least one processor, and at least one memory. The communications interface, the memory, and the processor are interconnected by using a bus. The processor executes instructions stored in the memory, so that the network device can perform the communications method according to any possible implementation of the second aspect of this application.

According to a thirteenth aspect, an embodiment of this application provides a communications system, and the communications system includes the communications apparatus shown in the fifth aspect and the communications apparatus shown in the sixth aspect.

According to the communications method and apparatus and the device provided in embodiments of this application, after the PCC rule of the multicast service is updated, the network device may send the update information of the multicast session of the multicast service to the base station, and the base station sends, based on the update information of the multicast session, the radio bearer information to the terminal device that joins the multicast session, so that the terminal device that joins the multicast session can obtain, in a timely manner, the latest radio bearer information corresponding to the multicast session, and the terminal device can obtain the service data from the network side in a multicast manner based on the latest radio bearer information, thereby improving resource utilization.

### BRIEF DESCRIPTION OF DRAWINGS

FIG. 1A is a diagram of an architecture of a 5G communications system according to an embodiment of this application;
FIG. 1B is a diagram of another architecture of a 5G communications system according to an embodiment of this application;
FIG. 1C is a diagram of still another architecture of a 5G communications system according to an embodiment of this application;
FIG. 1D is a diagram of yet another architecture of a 5G communications system according to an embodiment of this application;
FIG. 2 is a schematic flowchart of a communications method according to an embodiment of this application;
FIG. 3 is a schematic flowchart of another communications method according to an embodiment of this application;
FIG. 4 is a schematic flowchart of still another communications method according to an embodiment of this application;
FIG. 5 is a schematic diagram of a structure of a communications apparatus according to an embodiment of this application;
FIG. 6 is a schematic diagram of another structure of a communications apparatus according to an embodiment of this application;
FIG. 7 is a schematic diagram of still another structure of a communications apparatus according to an embodiment of this application;
FIG. 8 is a schematic diagram of yet another structure of a communications apparatus according to an embodiment of this application;
FIG. 9 is a schematic diagram of a hardware structure of a communications apparatus according to this application; and
FIG. 10 is a schematic diagram of a hardware structure of a communications apparatus according to this application.

### DESCRIPTION OF EMBODIMENTS

The technical solutions shown in this application may be applied to a fifth-generation mobile communications technology (the 5th generation mobile communications technology, 5G) system, or may be applied to a Long Term Evolution (long term evolution, LTE) system, or may be applied to a universal mobile telecommunications system (universal mobile telecommunications system, UMTS) terrestrial radio access network (UMTS terrestrial radio access network, UTRAN) system, or a radio access network (GSM EDGE radio access network, GERAN) architecture of a global system for mobile communications (global system for mobile communications, GSM)/enhanced data rate for GSM evolution (enhanced data rate for GSM evolution, EDGE) system, for example, a vehicle-to-everything (vehicle to X, V2X) system, a device to device (device to device, D2D) system, a machine type communication (machine type communication, MTC) system, or the like in a 5G system.

The technical solutions shown in this application may be further applied to another communications system, for example, an evolved communications system of the 5G system. This is not limited in this application.

The technical solutions shown in this application are described below in detail by using an example in which a communications system used in this application is a 5G communications system.

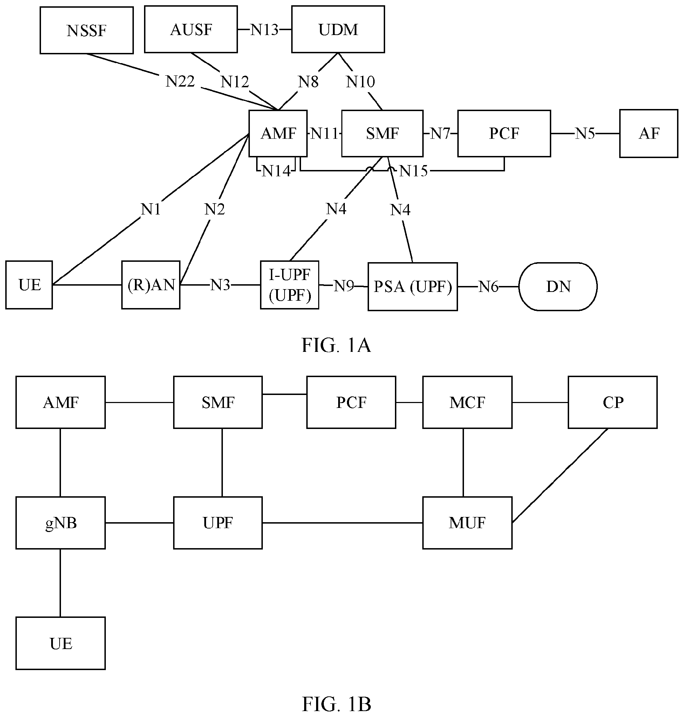

FIG. 1A is a diagram of an architecture of a 5G communications system according to an embodiment of this application. Referring to FIG. 1A, the system includes user equipment (user equipment, UE), an access network (access network, AN) node, an intermediate user plane function (intermediate user plane function, I-UPF) network element, a protocol data unit session anchor user plane function (protocol data unit session anchor user plane function, PSA-UPF) network element, a data network (data network, DN), an access and mobility management function (access and mobility management function, AMF) network element, a session management function (session management function, SMF) network element, a policy control function (policy control function, PCF) network element, an application function (application function, AF) network element, a network slice selection function (network slice selection function, NSSF) network element, an authentication server function (authentication server function, AUSF) network element, and a unified data management (unified data management, UDM) network element.

The UE may be a mobile phone (or referred to as a "cellular" phone) or a computer with a mobile terminal, for example, may be a portable, pocket-sized, handheld, computer built-in, or in-vehicle mobile apparatus. In addition, the UE may also be referred to as a mobile station (mobile station, MS), a terminal (terminal), or a terminal device (terminal device). This is not limited herein in this application.

The AN node may be a device that provides wireless access to the UE, including but not limited to an evolved Node B (evolved node B, eNB for short), wireless-fidelity access point (wireless-fidelity access point, Wi-Fi AP for short), worldwide interoperability for microwave access base station (worldwide interoperability for microwave access base station, WiMAX BS for short), a base station (for example, gNodeB, gNB) in a 5G network, and the like. The AN node may further be a (radio access network, RAN) node.

The I-UPF network element is located on a user plane path of a protocol data unit (protocol data unit, PDU) session, and is separately interconnected to the AN node and the protocol data unit session anchor user plane function (protocol data unit session anchor user plane function, PSA-PDU) network element. The 1-UPF network element may transfer an uplink user plane data packet and a downlink user plane data packet between the PSA-UPF network element and the AN node.

The PSA-UPF network element is an anchor UPF network element of the PDU session. The PSA-UPF network element may send uplink user plane data to the DN, and send, to a downstream node (such as the I-UPF network element or the AN node) by using a tunnel corresponding to the PDU session, downlink user plane data sent by the DN to the UE.

The DN is configured to provide a data service to the UE, and may be an access destination of a protocol data unit (protocol data unit, PDU) session of a user.

The AMF network element may perform mobility management in a mobile network, such as user location update, network registration of a user, and user handover. The AMF network element may access, by using an N1 interface, a non-access stratum (non-access stratum, NAS) signaling (including session management (session management, SM) signaling) of the UE, and access signaling of a RAN by using an N2 interface, to complete a registration procedure of the user and forwarding and mobility management of the SM signaling. The AMF network element may forward a message between the SMF network element and the UE.

The SMF network element may manage a session in the mobile network, such as session establishment, session modification, and session release.

The PCF network element may manage a user policy, including a mobility-related policy and a PDU session-related policy, such as a (quality of service, QoS) policy and a charging policy.

The AF network element may send a request to affect an SMF routing policy, and is responsible for selecting and relocating an application program in a local DN.

The NSSF network element is configured to select a network slice.

The AUSF network element provides an authentication service function to authenticate and authorize a terminal device.

The UDM network element may store information such as user subscription data.

It may be understood by a person skilled in the art that in FIG. 1A, a character on a connection line between the network elements identifies a communications interface between the network elements.

The 5G communications system shown in FIG. 1A does not support a multicast service. To enable the 5G communications system to support the multicast service, the architecture of the 5G communications system shown in FIG. 1A may be extended. An extended structure of the 5G communications system is described below with reference to FIG. 1B to FIG. 1D. The multicast service shown in embodiments of this application is a multicast broadcast service (multicast broadcast service).

FIG. 1B is a diagram of another architecture of a 5G communications system according to an embodiment of this application. Referring to FIG. 1B, based on the architecture of the 5G communications system shown in FIG. 1A, a multicast control function (multicast control function, MCF) network element and a multicast user plane function (multicast user plane function, MUF) network element are added. FIG. 1B further shows a content provider (content provider, CP). It should be noted that for ease of understanding and description, FIG. 1B shows only some network elements in FIG. 1A. Certainly, FIG. 1B may further include another network element in FIG. 1A. This is not specifically limited in this embodiment of this application.

The MCF network element may control a multicast service. There is a communications interface between the MCF network element and the CP, so that the MCF network element can receive multicast service information (for example, description of the multicast service) from the CP. There is a communications interface between the MCF network element and the PCF network element, so that the PCF network element can establish a service for the multicast service.

The multicast service information may include description information of the multicast service. Optionally, the multicast service information may further include information about a terminal device, for example, an identifier of one or more terminal devices that are allowed (or request) to join the multicast service, and an identifier of a terminal device group.

Optionally, the description information of the multicast service includes description information of one or more multicast service flows. The description information of the multicast service flow may include at least one of the following content: feature information of the multicast service flow, a bandwidth requirement of the multicast service flow, a priority of the multicast service flow, and a QoS requirement (such as jitter, a delay, or a packet loss rate) of the multicast service flow. The feature information of the multicast service flow may include a multicast address, a destination port number, a source address, and the like of the multicast service.

The MUF network element may transfer a multicast packet. For example, the MUF network element may send, to a UPF network element, a multicast packet received from the CP.

In the architecture of the communications system shown in FIG. 1B, the MCF network element may be integrated into the PCF network element, and the MUF network element may be integrated into the UPF network element. This is not limited in this embodiment of this application.

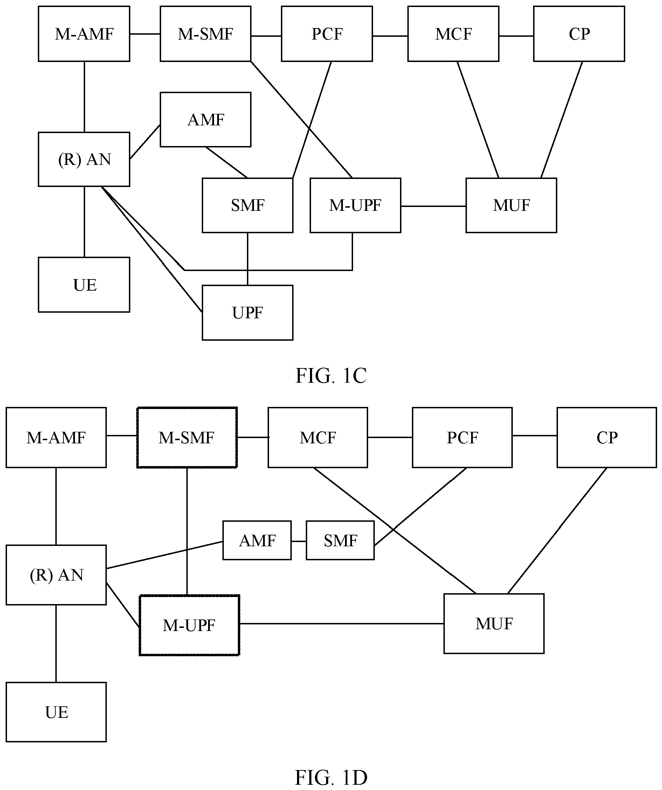

FIG. 1C is a diagram of still another architecture of a 5G communications system according to an embodiment of this application. Referring to FIG. 1C, based on the architecture of the 5G communications system shown in FIG. 1A, an MCF network element, an MUF network element, a multicast broadcast service (multicast broadcast service, M)-AMF network element, an M-SMF network element, an M-PCF network element, and an M-UPF network element are added. FIG. 1C further shows a CP network element. It should be noted that for ease of understanding and description, FIG. 1C shows only some network elements in FIG. 1A. Certainly, FIG. 1C may further include another network element in FIG. 1A. This is not specifically limited in this embodiment of this application.

In FIG. 1C, the AMF network element, the SMF network element, and the UPF network element are network elements that provide a service to the UE. The UPF network element is only responsible for transferring data of a unicast service to the UE. Data of a multicast service is sent to the UE through the MUF network element, the M-UPF network element, and a (R)AN node. The M-SMF network element, the M-AMF network element, and the M-PCF network element are configured to manage a resource of the multicast service. For example, the M-PCF network element makes multicast service QoS based on service description of the MCF network element, and the M-SMF network element and the M-AMF network element are configured to create a multicast session on the (R)AN node. There is a communications interface (not drawn in FIG. 1C) between the SMF network element and the MCF network element, or there is a communications interface (not drawn in FIG. 1C) between the SMF network element and the M-PCF network element.

In FIG. 1C, the SMF network element and the AMF network element may also allocate a resource to the multicast service. During actual deployment, the M-SMF network element and the M-AMF network element may serve the UE or may not serve the UE. For example, when the M-SMF network element and the M-AMF network element manage the multicast service, the M-SMF network element and the M-AMF network element do not necessarily serve UE that is receiving the multicast service.

The M-SMF network element may be configured to manage a multicast session, such as establishment of a multicast session, modification of a multicast session, and release of a multicast session. The M-AMF network element may be configured to transfer a multicast session-related message between the M-SMF network element and a base station.

FIG. 1D is a diagram of yet another architecture of a 5G communications system according to an embodiment of this application. Referring to FIG. 1D, based on the architecture of the 5G communications system shown in FIG. 1A, an MCF network element, an MUF network element, an M-AMF network element, an M-SMF network element, and an M-UPF network element are added. FIG. 1D further shows a CP. It should be noted that for ease of understanding and description, FIG. 1D shows only some network elements in FIG. 1A. Certainly, FIG. 1D may further include another network element in FIG. 1A. This is not specifically limited in this embodiment of this application.

In FIG. 1D, a function of the MCF network element is similar to a function of the SMF network element. The MCF network element may manage a multicast service. When the MCF network element has the function of the SMF network element, the MCF network element may also provide a service to a session of the UE. This is not limited in this embodiment of this application.

In FIG. 1D, there is a communications interface between the CP and each of the PCF network element and a network exposure function (network exposure function, NEF) network element (not shown in FIG. 1D), so that the CP can send multicast service information to the PCF network element. If there is a communications interface between the CP and the NEF network element, the CP first sends the multicast service information to the NEF network element, and then the NEF network element sends the multicast service information to the PCF network element. The MCF network element may obtain, from the PCF network element, a policy and charging control (policy and charging control, PCC) rule corresponding to a multicast service, to create a multicast session for the multicast service.

The MCF network element may interface with a base station by using the M-AMF network element, and the M-AMF network element may also provide a service to the UE. The SMF network element serving the UE may interface with the PCF network element, so that the SMF network element can obtain multicast service-related information from the PCF network element.

The network element in FIG. 1A to FIG. 1D may be a network element implemented on dedicated hardware, may be a software instance running on dedicated hardware, or may be an instance of a virtualized function on a proper platform. For example, the virtualized platform may be a cloud platform.

It should be noted that FIG. 1B to FIG. 1D merely illustrates, by using an example, an architecture of a communications system that can be used in this application, and are not intended to limit the architecture of the communications system applicable to this application.

For ease of understanding, concepts in this application are described below.

A multicast service includes a multicast-type service or a broadcast-type service, that is, a multicast service or a broadcast service. For example, the multicast service may be a live television program.

A multicast session is a session established for a specific multicast service, and the session is used to send, to an AN node, data that is of the multicast service and that is from a core network node (for example, a UPF network element). The multicast session may be used to transmit data of a multicast service to a plurality of terminal devices. For example, a core network device may send the data of the multicast service to the AN node by using the multicast session, and the AN node sends the data of the multicast service data to one or more terminal devices. Specifically, multicast sessions may be established on different AN nodes for a multicast service.

Radio bearer information may include configuration information of a radio bearer corresponding to a multicast session. The radio bearer corresponding to the multicast session is a radio bearer allocated to the multicast session. The configuration information of the radio bearer may include an identifier of the radio bearer and an identifier of a multicast QoS flow mapped to the radio bearer. The multicast QoS flow mapped to the radio bearer is a multicast QoS flow sent on the radio bearer. The identifier of the multicast QoS flow may be a multicast QoS flow identifier (QoS Flow Identifier, QFI). A base station may determine, based on strength of a radio signal received by a terminal device, a quantity of terminals that join a multicast service, and the like, a manner in which the terminal device receives data of a multicast session. For example, when the strength of the radio signal is weak, the data is sent to the terminal in a unicast form; or when the strength of the radio signal is strong enough, the data is sent in a multicast form. When a plurality of terminals whose signals are strong enough join the multicast service, the data may be sent in a multicast form. When the terminal device receives the data of the multicast session in a multicast manner, the radio bearer information further includes radio network temporary identifier information corresponding to the multicast session, and the terminal device receives a data packet of the multicast service based on the multicast radio network temporary identifier information.

Multicast information of a multicast service may include QoS information of a multicast QoS flow in the multicast service and an identifier of the multicast QoS flow.

Based on the architectures of the communications systems shown in FIG. 1B to FIG. 1D, embodiments of this application provide a communications method. In the communications method, after a PCC rule of a multicast service is updated, a network device may send a multicast session update request to a base station, where the multicast session update request includes update information of a multicast session. The base station may obtain, in a context of the multicast session, an identifier of a terminal device that joins the multicast session, and send radio bearer information to the terminal device based on the update information. In this way, the terminal device that joins the multicast session can obtain latest radio bearer information corresponding to the multicast session, so that the terminal device can obtain service data from a network side in a multicast manner based on the latest radio bearer information, thereby improving resource utilization.

Specific embodiments are used below to describe in detail the technical solutions of this application. It should be noted that the following several embodiments may exist independently or may be combined with each other. For same or similar content, for example, explanation and description of a term or a noun and explanation and description of a step, refer to each other in different embodiments. Details are not repeatedly described.

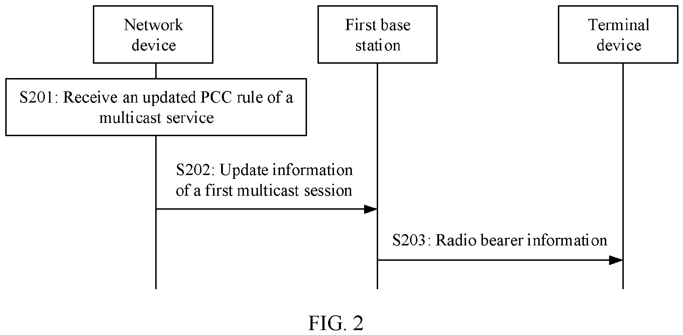

FIG. 2 is a schematic flowchart of a communications method according to an embodiment of this application. Refer to FIG. 2. The method may include the following steps.

S201: A network device receives an updated PCC rule of a multicast service.

Optionally, the network device is an SMF network element, an MCF network element, or the like.

Optionally, the PCC rule includes at least one of the following information: a multicast broadcast service identifier (multicast broadcast service identifier, MBS-ID) of the multicast service, description information of a multicast flow in the multicast service, an identifier of the multicast flow in the multicast service, QoS information of the multicast flow in the multicast service, information about a terminal device supported by the multicast service, and information about a location supported by the multicast service.

Description information of a multicast service flow may be used to identify data of the multicast service flow, and the description information of the multicast service flow may include a multicast address, a destination port number, a source address, and the like of the multicast service.

QoS information of a multicast service flow includes at least one of a maximum bandwidth requirement of the multicast service flow, an address resolution protocol (address resolution protocol, ARP) of the multicast service flow, and a 5G quality of service identifier (5G QoS identifier, 5QI) of the multicast service flow.

For example, the network device may receive the updated PCC rule from a PCF network element, that is, the PCF network element sends the updated PCC rule to the network device. For example, after determining that the PCC rule of the multicast service is updated, the PCF network element sends the PCC rule of the multicast service to the network device. The PCC rule may be referred to as an updated PCC rule of the multicast service, which may be subsequently referred to as an updated PCC rule for short.

S202: The network device sends, to a first base station corresponding to a first multicast session of the multicast service, update information of the first multicast session based on the updated PCC rule.

The update information of the first multicast session may be carried in a multicast session update request, and the multicast session update request may be used to request to update a multicast session. Updating a multicast session may include one or more of the following: modifying a QoS parameter of the multicast session, adding a new multicast QoS flow, and deleting an existing multicast QoS flow.

In one example, the name of the multicast session update request has a function of requesting to update a multicast session.

In another example, the multicast session update request includes first indication information, the first indication information is used to request to update a multicast session, and the first indication information may correspond to a preset field in a third message. For example, when the preset field is a preset value, the preset field may be used to request to update the multicast session.

Optionally, the multicast session update request further includes an identifier of a multicast session. When an identifier of the multicast service can be used to uniquely determine a multicast session, the identifier of the multicast session may be further the identifier of the multicast service.

Optionally, the update information includes one or more of the following information:
first information: QoS information of a multicast QoS flow newly added to the multicast session and/or an identifier of the newly added multicast QoS flow; or
second information: an identifier of a multicast QoS flow deleted from the multicast session; or
third information: QoS information of an updated multicast QoS flow in the multicast session and/or an identifier of the updated multicast QoS flow.

In an example, an SMF network element determines the update information of the multicast session based on the updated PCC rule, and then sends, to the base station, the multicast session update request that includes the update information. Assuming that a newly added PCC rule appears in the multicast service, the SMF network element determines, based on the newly added PCC rule, that the update information includes the first information and/or the third information. Assuming that the PCC rule of the multicast service is modified (for example, adding a multicast QoS flow, updating a multicast QoS flow, or deleting a multicast QoS flow), the SMF network element determines that the update information includes one or more of the first information, the second information, or the third information. Assuming that the PCC rule of the multicast service is deleted, the SMF network element determines that the update information includes the second information and/or the third information.

S203: The base station sends, based on the update information, radio bearer information to a terminal device that joins the multicast session.

The radio bearer information may be used by the terminal device to receive data of the multicast session. In other words, after the terminal device receives the radio bearer information, the terminal device may receive the data of the multicast session based on the radio bearer information.

The radio bearer information may include at least one of the following information:
configuration information of a newly added radio bearer; or
an identifier of a deleted radio bearer; or
configuration information of a modified radio bearer.

The configuration information of the newly added radio bearer may include an identifier of the newly added radio bearer and an identifier of a QoS flow mapped to the newly added radio bearer.

The configuration information of the modified radio bearer includes an identifier of the modified radio bearer and an identifier of a QoS flow mapped to the modified radio bearer.

When the update information includes different information, the radio bearer information also includes different information. The information included in the radio bearer information may include the following cases.

Case 1: When the update information includes the QoS information of the multicast QoS flow newly added to the multicast session and the identifier of the newly added multicast QoS flow, the radio bearer information includes the configuration information of the newly added radio bearer and/or the configuration information of the modified radio bearer.

In this case, when a multicast QoS flow is newly added to the multicast session, a radio bearer may be newly added and/or an existing radio bearer may be modified. When the existing radio bearer is modified, for example, the existing radio bearer may be mapped to more QoS flows, that is, more QoS flows may be sent by using the existing radio bearer.

Case 2: When the update information includes the identifier of the multicast QoS flow deleted from the multicast session, the radio bearer information includes the identifier of the deleted radio bearer and/or the configuration information of the modified radio bearer.

In this case, when a multicast QoS flow is deleted from the multicast session, a radio bearer may be deleted and/or an existing radio bearer may be modified. When the existing radio bearer is modified, for example, the existing radio bearer may be mapped to fewer QoS flows, that is, fewer QoS flows may be sent by using the existing radio bearer.

Case 3: When the update information includes the QoS information of the updated multicast QoS flow in the multicast session and the QFI corresponding to the updated multicast QoS flow, the radio bearer information includes at least one of the configuration information of the newly added radio bearer, the identifier of the deleted radio bearer, or the configuration information of the modified radio bearer.

In this case, when an updated multicast QoS flow exists in the multicast session, one or more of the following operations may be performed on a radio bearer: newly adding a radio bearer, deleting an existing radio bearer, or modifying an existing radio bearer. When the existing radio bearer is modified, for example, the existing radio bearer may be mapped to fewer QoS flows, that is, fewer QoS flows may be sent by using the existing radio bearer; or the existing radio bearer may be mapped to more QoS flows, that is, more QoS flows may be sent by using the existing radio bearer; or the existing radio bearer may be mapped to different QoS flows, that is, different QoS flows may be sent by using the existing radio bearer. For example, a QoS flow is adjusted from one radio bearer to another radio bearer for sending.

In one example, it is assumed that a service flow is newly added to the multicast session. In this case, a radio bearer may be newly added or a radio bearer may be modified. The update information of the multicast session may include the QoS information of the multicast QoS flow newly added to the multicast session and the identifier of the newly added multicast QoS flow. Correspondingly, the base station may add a radio bearer corresponding to the newly added multicast QoS flow, that is, the newly added radio bearer; or the base station may modify an existing radio bearer, and send the radio bearer information to the terminal device that joins the multicast session. In other words, the radio bearer information includes the configuration information of the newly added radio bearer and/or the configuration information of the modified radio bearer.

In another example, it is assumed that a service flow is deleted from the multicast session. In this case, a radio bearer may be deleted or a radio bearer may be modified. The update information of the multicast session may include the identifier of the multicast QoS flow deleted from the multicast session. Correspondingly, the base station may delete an existing radio bearer (the deleted radio bearer), or the base station may modify the existing radio bearer, and send the radio bearer information to the terminal device that joins the multicast session. In other words, the radio bearer information includes the identifier of the deleted radio bearer and/or the configuration information of the modified radio bearer.

In another example, it is assumed that a service flow is updated in the multicast session. In this case, a radio bearer may be deleted, or a radio bearer may be newly added, or a radio bearer may be modified. The update information includes the QoS information of the updated multicast QoS flow in the multicast session and the QFI corresponding to the updated multicast QoS flow. Correspondingly, the base station may add a radio bearer corresponding to the newly added multicast QoS flow, that is, the newly added radio bearer, or the base station may modify an existing radio bearer, or the base station may delete the existing radio bearer. The radio bearer information includes at least one of the configuration information of the newly added radio bearer, the identifier of the deleted radio bearer, or the configuration information of the modified radio bearer.

Optionally, the base station may send the radio bearer information to the terminal device by using an RRC message of the terminal device. For example, the base station may obtain a context of the terminal device based on an identifier of the terminal device, and send the RRC message to the terminal device based on the context of the terminal device.

The base station may obtain the context of the terminal device in the following manner: The base station obtains, from a context of the multicast session, an identifier of the context (for example, a radio context) of the terminal device that joins the multicast session. The identifier of the context of the terminal device may be a radio network temporary identifier (cell-radio network temporary identifier, C-RNTI) of the terminal device or another identifier. The base station finds the context of the terminal device based on the identifier of the context of the terminal device, and sends the RRC message to the terminal device based on information (for example, configuration information of a signaling radio bearer) in the context of the terminal device.

According to the communications method provided in this embodiment of this application, after the PCC rule of the multicast service is updated, the network device may send the update information of the multicast session of the multicast service to the base station, and the base station sends, based on the update information of the multicast session, the radio bearer information to the terminal device that joins the multicast session, so that the terminal device that joins the multicast session can obtain, in a timely manner, latest radio bearer information corresponding to the multicast session, and the terminal device can obtain service data from a network side in a multicast manner based on the latest radio bearer information, thereby improving resource utilization.

Optionally, in an implementable scenario of the foregoing embodiment, the method further includes the following step:
The base station obtains, based on the context of the multicast session, an identifier of the terminal device that joins the multicast session.

The context of the multicast session may include the identifier of the terminal device that joins the multicast session.

Optionally, in another implementable scenario of the foregoing embodiment, step S203 may include the following steps:

The base station determines the context of the terminal device based on the identifier of the terminal device that joins the multicast session.

The base station sends the radio bearer information to the terminal device based on the context of the terminal device and the update information.

For example, the base station obtains the context of the terminal device based on the identifier of the terminal device, and sends the radio bearer information to the terminal device based on the context of the terminal device. For example, the base station may send the radio bearer information to the terminal device by using a signaling bearer corresponding to signaling bearer information in the context of the terminal device.

Optionally, in another implementable scenario of the foregoing embodiment, the method further includes the following step:
The base station sends, to a session management function SMF network element, indication information used to indicate that the multicast session is successfully updated or indication information used to indicate that the multicast session of the terminal device fails to be updated.

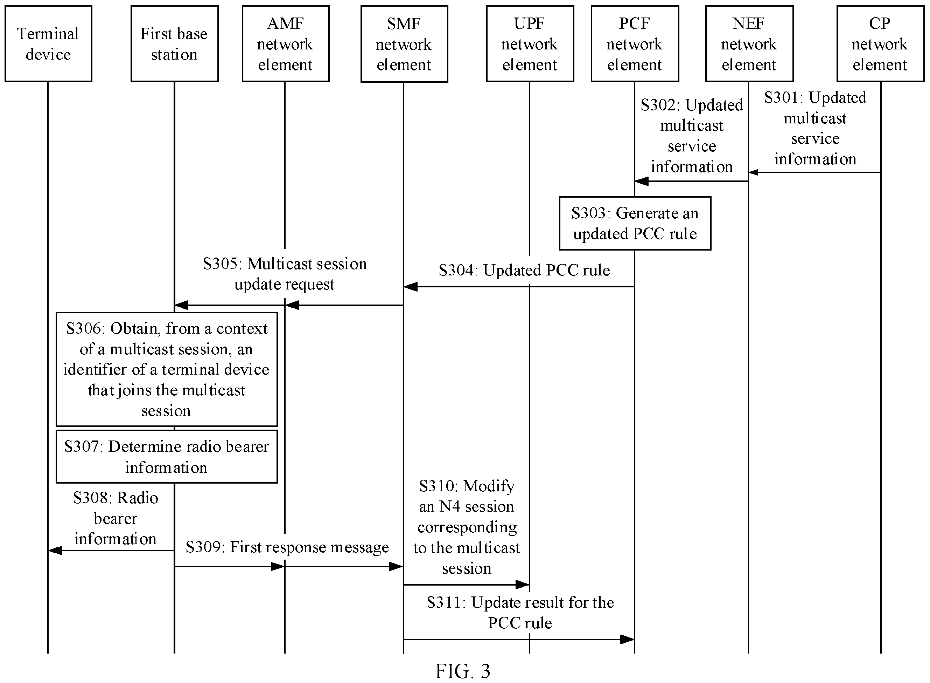

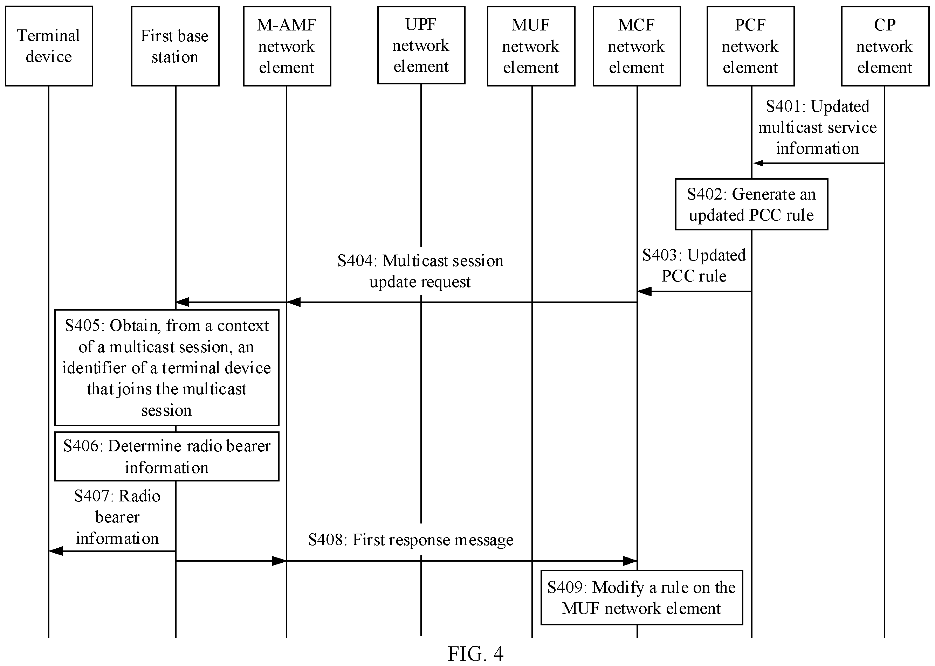

Based on the foregoing embodiment, the foregoing communications method is described below in detail with reference to FIG. 3 and FIG. 4.

FIG. 3 is a schematic flowchart of another communications method according to an embodiment of this application. The embodiment shown in FIG. 3 may be applied to the architectures of the communications systems shown in FIG. 1B and FIG. 1C. Refer to FIG. 3. The method may include the following steps.

S301: An NEF network element obtains updated multicast service information from a CP.

Optionally, the updated multicast service information may be updated multicast service information of a specific multicast service, and may be specifically complete updated multicast service information, or may be an updated part (that is, a part that is updated) of multicast service information.

Correspondingly, the CP may send the updated part of the multicast service information to the NEF network element, and the CP does not send an un-updated part (that is, a part that is not updated) of the multicast service information to the NEF network element. For example, it is assumed that a group communications service initially has only a voice communications function. To add a video function to the group communications service, multicast service information needs to be updated.

In step S301, the NEF network element may obtain the updated multicast service information from the CP in the following implementation: The CP actively sends the updated multicast service information to the NEF network element. In this manner, after multicast service information of a multicast service is updated, the CP actively sends updated multicast service information of the multicast service to the NEF network element.

S302: The NEF network element sends the updated multicast service information to a PCF network element.

After the NEF network element obtains the updated multicast service information from the CP, the NEF network element sends the updated multicast service information to the PCF network element.

The updated multicast service information sent by the NEF network element to the PCF network element may be the same as or may be different from the updated multicast service information obtained by the NEF network element from the CP.

In addition, the NEF network element may further send an identifier of a multicast service to the PCF network element. The identifier of the multicast service may be the same as or may be different from an identifier that is of a multicast service and that is in the updated multicast service information in S301.

It should be noted that the CP may directly send the updated multicast service information to the PCF network element. In other words, steps S301 and S302 may be replaced with the following: The CP sends the updated multicast service information to the PCF network element. This is not limited.

S303: The PCF network element obtains an updated PCC rule of a multicast service based on the updated multicast service information.

For example, assuming that a QoS requirement in the updated multicast service information changes, the PCF network element modifies, based on a new QoS requirement in the updated multicast service information, a PCC rule corresponding to the multicast service. Assuming that the updated multicast service information includes information about a new multicast service flow, the PCF network element generates a corresponding PCC rule based on a QoS requirement of the new multicast service flow. The PCF network element may generate a new PCC rule, and the PCC rule includes description information of the new multicast service flow and QoS information (such as an ARP, a 5QI, and a maximum bandwidth) that is generated based on the QoS requirement of the new multicast service flow. Alternatively, if a PCC rule matching the QoS requirement of the new multicast service flow exists, the PCF network element may update the existing PCC rule, for example, add the description information of the new multicast service flow to the PCC rule, and update a QoS parameter of the PCC rule, such as a maximum bandwidth, where the maximum bandwidth includes a bandwidth requirement of the new multicast service flow.

S304: The PCF network element sends the updated PCC rule of the multicast service to an SMF network element.

Optionally, the PCF network element sends an update request to the SMF network element. The update request includes the updated PCC rule of the multicast service, and the update request is used to request the SMF network element to update the PCC rule of the multicast service.

Optionally, the SMF network element is an M-SMF network element.

In step S304, in different cases, the PCF network element sends the updated PCC rule to the SMF network element in different manners, which are specifically described below.

Case 1: The SMF network element creates a policy session for a multicast session, and the policy session is in a one-to-one correspondence with the multicast session. For example, if the SMF network element creates a plurality of multicast sessions for the multicast service, and creates a multicast session for each base station that sends the multicast service, the SMF network element creates a policy session for each of the multicast sessions of the multicast service.

In Case 1, in step S304, the PCF network element may determine, based on a correspondence between a policy session and a multicast session, a policy session corresponding to the multicast service, and send the updated PCC rule of the multicast service to the SMF network element by using the policy session.

For example, when the SMF network element requests the PCF network element to create a first policy session for a first multicast session, the SMF network element may send, to the PCF network element, an identifier (for example, an MSB-ID of a first multicast service) of the first multicast service corresponding to the first multicast session, and the PCF network element records a correspondence between the first policy session and the first multicast service. Correspondingly, when a PCC rule of the first multicast service changes, the PCF network element may determine, based on the correspondence, the first policy session corresponding to the first multicast service, and send an updated PCC rule of the first multicast service to the SMF network element that creates the first policy session.

Optionally, in a multicast session establishment process, the SMF network element sends a notification message to the PCF network element by using a policy session corresponding to a PDU session of a terminal device, to notify the PCF network element that the SMF network element creates a multicast session for the multicast service. In this way, the PCF network element may record that the SMF network element creates the multicast session for the multicast service. Correspondingly, the PCF network element may determine, based on the record, that the SMF network element creates the multicast session for the multicast service.

The notification message may carry an identifier of the SMF network element, for example, a fully qualified domain name (fully qualified domain name, FQDN) or an Internet Protocol (internet protocol, IP) address of the SMF network element, so that the PCF network element can determine, based on the identifier of the SMF network element, the SMF network element that creates the multicast session for the multicast service.

The SMF network element may be an M-SMF network element.

Case 2: The SMF network element does not create a policy session for a multicast session of the multicast service, a terminal device joins the multicast service by using a PDU session, and the SMF network element establishes a second policy session for the PDU session.

In a process in which the terminal device joins the multicast service by using the PDU session, the SMF network element obtains the PCC rule of the multicast service from the PCF network element by using the second policy session.

In this case, in step S304, the PCF network element may send the updated PCC rule of the multicast service to the SMF network element by using the second policy session corresponding to the PDU session.

Case 3: The SMF network element creates one or more multicast sessions for the multicast service, but the SMF network element creates one policy session for the multicast service, which may be referred to as a third policy session.

In this case, in step S304, the PCF network element may send the updated PCC rule of the multicast service to the SMF network element by using the third policy session.

For example, when the multicast service is sent by using a plurality of base stations, the SMF network element creates, for each of the plurality of base stations on the SMF network element, a multicast session corresponding to the multicast service, and the SMF network element creates a policy session, that is, the third policy session, for the plurality of multicast sessions corresponding to the multicast service. When the SMF network element creates the policy session, the SMF network element sends an identifier (for example, an MBS-ID) of the multicast service to the PCF network element. When the PCC rule of the multicast service changes, the PCF network element may determine, based on the third policy session, the SMF network element that creates the third policy session, so as to send the updated PCC rule of the multicast service to the SMF network element.

The third policy session corresponds to the one or more multicast sessions of the multicast service.

Optionally, in this case, the SMF network element may be an M-SMF network element.

Case 4: If before the SMF network element creates the policy session corresponding to the multicast session of the multicast service, the terminal device joins the multicast service by using the PDU session,
in Case 2, in step S304, the PCF network element may send the updated PCC rule of the multicast service to the SMF network element by using the policy session corresponding to the PDU session of the terminal device.

Further, when the SMF network element creates the policy session corresponding to the multicast session, the SMF network element may store, as the PCC rule of the multicast service, a PCC rule that is of the multicast service (that is, the updated PCC rule of the multicast service) and that is received from the policy session corresponding to the PDU session of the terminal device, and send an identifier of the stored PCC rule of the multicast service to the PCF network element. In this way, the PCF network element may not need to send a repeated updated PCC rule to the SMF network element.

It should be noted that the multicast session shown in the following is the first multicast session, and the base station shown in the following is a base station corresponding to the first multicast session (that is, the multicast service is sent to the terminal device by using the base station). The multicast session created for the multicast service on the SMF network element may correspond to one or more base stations, that is, the multicast session is created for the multicast service on the one or more base stations.

S305: The SMF network element sends, based on the updated PCC rule, multicast session update request to a first base station corresponding to a first multicast session of the multicast service.

The multicast session update request may be used to request to update the first multicast session, and the multicast session update request includes update information of the first multicast session. The multicast session update request may be an N2 multicast session update request.

Optionally, the SMF network element sends the multicast session update request to the first base station by using an AMF network element.

It should be noted that the description in S202 is applicable to S305, and details are not described herein again.

Specifically, in step S305, the SMF network element may first determine (select) the first base station, and then send the multicast session update request to the first base station. Step S305 is described below for different cases.

Case 1: A multicast session of the multicast service is in a one-to-one correspondence with a policy session of the multicast service.

In this case, a multicast session and a policy session created by the SMF network element for the multicast service are in a one-to-one correspondence.

Optionally, the multicast session on the SMF network element may correspond to one or more base stations, that is, data of the multicast service is sent by using the one or more base stations. In this case, the SMF network element determines the one or more base stations corresponding to the multicast session as the first base station, and sends the multicast session update request to the first base station.

Case 2: The SMF network element does not create a policy session for a multicast session of the multicast service, a terminal device joins the multicast service by using a PDU session, and the SMF network element obtains the updated PCC rule of the multicast service by using a policy session corresponding to the PDU session.

In this case, a context of the PDU session stores information about the multicast session of the multicast service. The SMF network element determines, based on the information about the first multicast session, the first base station corresponding to the first multicast session, and sends the multicast session update request to the first base station.

Optionally, the information about the first multicast session is an identifier of the first multicast session. The SMF network element determines, based on the identifier of the first multicast session, a context of the multicast session created for the multicast service on the SMF network element; or the SMF network element determines a context of the first multicast session based on an identifier of the multicast service, where the context of the first multicast session stores the identifier of the multicast service.

Optionally, the multicast session on the SMF network element may correspond to a multicast session on one or more base stations, and the SMF network element sends the multicast session update request to one or more first base stations corresponding to the first multicast session. The multicast session created for the multicast service on the SMF network element may be in a one-to-one correspondence with the multicast session created for the multicast service on the base station. In this scenario, the SMF network element sends the multicast session update request to the first base station corresponding to the first multicast session.

Case 3: One or more multicast sessions correspond to one policy session.

In this manner, the SMF network element creates one or more multicast sessions for the multicast service on the SMF network element. For example, a multicast session created on the SMF network element is in a one-to-one correspondence with a multicast session created on a base station. To be specific, when the multicast service is sent by using a plurality of base stations, the SMF network element creates a multicast session for each base station on the SMF network element. Certainly, one multicast session may correspond to a plurality of base stations. This is not limited.

In this case, after receiving the updated PCC rule by using the policy session, the SMF network element determines a corresponding first base station based on a first multicast session corresponding to the policy session, and sends the multicast session update request to the first base station. For example, the policy session may store an identifier of a corresponding multicast session, or the SMF network element determines a corresponding first multicast session based on an identifier that is of the multicast service and that is stored in the policy session. The first multicast session also stores the identifier of the multicast service.

The SMF network element sends the multicast session update request to the first base station corresponding to one or more first multicast sessions corresponding to the policy session.

The SMF network element may send the multicast session update request to the first base station in the following feasible implementations.

In a first implementation, the SMF network element sends the multicast session update request (an N2 multicast session update request) to the first base station by using a signaling connection of a terminal device.

In this manner, the SMF network element creates a PDU session for the terminal device, and the terminal device joins the multicast service by using the PDU session. The SMF network element sends, by using an interface related to the terminal device, the N2 multicast session update request to the AMF network element that servers the terminal device. A uniform resource identifier (uniform resource identifier, URI) used by the SMF network element to send the N2 multicast session update request to the AMF network element includes an identifier of the terminal device. The AMF network element then sends the N2 multicast session update request to first base station by using an N2 signaling connection established for the terminal device. Optionally, the N2 multicast session update request may include an identifier of the multicast service or an identifier of the multicast session, so that the first base station associates the multicast session update request with a multicast session created for the multicast service on the first base station.

In a second implementation, in a multicast session establishment process, a connection is established for the multicast session. For example, an N2 signaling connection between the first base station and the AMF network element and a connection between the AMF network element and the SMF network element are established. In this implementation, the AMF network element allocates a resource URI to the multicast session, and the resource URI includes identification information used to identify the multicast session. In the multicast session establishment process, the AMF network element sends the resource URI to the SMF network element. Therefore, when the SMF network element sends the multicast session update request, the SMF network element sends the multicast session update request to the AMF network element by using the resource URI, and the AMF network element may determine the corresponding multicast session based on the identification information in the resource URI, so as to obtain the N2 signaling connection of the multicast session, and send the multicast session update request to the first base station by using the N2 signaling connection. In this implementation, the N2 multicast session update request may not include an identifier of the multicast session or an identifier of the multicast service, and the first base station may determine the corresponding multicast session based on the N2 signaling connection.

In a third implementation, the SMF network element sends the multicast session update request to the first base station by using a network element-level message.

In this implementation, a message sent by the SMF network element to the AMF network element includes at least one of an identifier of the first base station, an identifier of the multicast service, and an identifier of the multicast session. If the SMF network element sends the identifier of the multicast session to the AMF network element, the AMF network element may determine the identifier of the first base station based on the identifier of the multicast session (for example, the AMF network element may store a context of the multicast session, and correspondingly, the AMF network element may query, in the context of the multicast session, the identifier that is of the first base station and that corresponds to the identifier of the multicast session), and send the multicast session update request to the first base station by using a network element-level message. Alternatively, if the SMF network element sends the identifier of the multicast session and the identifier of the multicast service to the AMF network element, the AMF network element may determine the identifier of the first base station based on the identifier of the multicast session and the identifier of the multicast service, and send the multicast session update request to the first base station by using a network element-level message. Alternatively, the SMF network element may send the identifier of the first base station to the AMF network element.

S306: The first base station obtains, based on a context of the multicast session, an identifier of a terminal device that joins the multicast session.

It should be noted that, for an execution process of S306, refer to the execution process of S203. Details are not described herein again.

S307: The first base station sends, based on the multicast session update request, radio bearer information to the terminal device that joins the multicast session.

Specifically, the first base station may determine the radio bearer information based on the update information of the first multicast session, and send the determined radio bearer information to the terminal device that joins the multicast session in S306.

The radio bearer information is used by the terminal device to receive data of the multicast session. In other words, after the terminal device receives the radio bearer information, the terminal device may receive the data of the multicast session based on the radio bearer information.

It should be noted that for an execution process of S307, refer to the execution process of S203. Details are not described herein again.

S309: The base station sends a first response message to the SMF network element.

The first response message may be a response message of the base station for the multicast session update request.

Optionally, the first response message may include an update result for the multicast session. For example, the update result is used to indicate whether a QoS flow corresponding to the multicast service is successfully updated.

For example, the SMF network element sends the multicast session update request to the base station by using a signaling connection of the terminal device (refer to step S305), and the first response message may include indication information indicating that a QoS flow corresponding to a multicast service of the terminal device is successfully updated or indication information used to indicate that the QoS flow corresponding to the multicast service of the terminal device fails to be updated.

Optionally, the base station may send the first response message to the SMF network element by using the AMF network element.

S310: The SMF network element modifies, based on the PCC rule, an N4 session corresponding to the multicast session.

Optionally, after the SMF network element receives the first response message, the SMF network element modifies, based on the PCC rule, the N4 session corresponding to the multicast session.

Optionally, the SMF network element may modify a packet detection rule (packet detection rule, PDR), a QoS enforcement rule (QoS enforcement rule, QER), a usage reporting rule (usage reporting rule, URR), and the like that correspond to the multicast session. For example, when a new multicast service flow is added, the SMF network element may add description information (for example, address information and a port number) of the new multicast service flow to the PDR, so that a UPF network element can detect the service flow based on the PDR. When the PCC rule indicates that different QoS control (for example, increasing a bandwidth) needs to be performed on the multicast service, the QER may be modified, so that the UPF network element executes a new QoS control rule. When the PCC rule changes the usage reporting rule, the URR may be modified, so that the UPF network element performs corresponding usage reporting based on the URR.

S311: The SMF network element sends an update result for the PCC rule to the PCF network element.

Optionally, the SMF network element sends a second response message to the PCF network element, and the second response message may include the update result for the PCC rule, and the update result is used to indicate whether the PCC rule is successfully updated.

Optionally, in S307 and S308, if the base station fails to modify radio bearer information of a specific terminal device or fails to send modified radio bearer information to the terminal device, the base station may send a message to an SMF network element corresponding to a PDU session of the terminal device, where the message is used to notify the SMF network element that a multicast session of the terminal device fails to be updated. For example, when the terminal device receives the multicast service from the base station in a unicast manner, if a unicast resource fails to be allocated to the terminal device based on a QoS parameter of the new multicast service, and the terminal device is not suitable for receiving the multicast service in a multicast manner, the base station may send the message to the SMF network element corresponding to the PDU session of the terminal device, to notify the SMF network element that the multicast session of the terminal device fails to be updated.

In the embodiment shown in FIG. 3, after the multicast service information of the multicast service is updated, the PCF network element may generate the updated PCC rule based on the updated multicast service information, and send the updated PCC rule to the SMF network element, so that the SMF network element sends the multicast session update request to the base station, and the base station sends, based on the update information in the multicast session update request, the radio bearer information to the terminal device that joins the multicast session. In this way, the terminal device that joins the multicast session can obtain latest radio bearer information corresponding to the multicast session, so that the terminal device can obtain service data from a network side in a multicast manner based on the latest radio bearer information, thereby improving resource utilization.

FIG. 4 is a schematic flowchart of still another communications method according to an embodiment of this application. The embodiment shown in FIG. 4 may be applied to the architecture of the communications system shown in FIG. 1D. Refer to FIG. 4. The method may include the following steps.

S401: A PCF network element obtains updated multicast service information from a CP.

It should be noted that for an execution process of S401, refer to the execution process of S301. A difference between S301 and S401 lies in the following: S401 is performed by the PCF network element, and S301 is performed by an MCF network element.

S402: The PCF network element generates an updated PCC rule based on the updated multicast service information.

It should be noted that, for an execution process of S402, refer to the execution process of S303. Details are not described herein again.

S403: The PCF network element sends the updated PCC rule to an MCF network element.

In a multicast session establishment process, a policy session corresponding to a multicast session is established between the MCF network element and the PCF network element. In a policy session establishment process, the MCF network element may determine that the policy session corresponds to a multicast service. Because the PCF network element sends a PCC rule of the multicast service to the MCF network element by using the policy session, the PCF network element may send the updated PCC rule to the MCF network element by using the policy session.

It should be noted that for a manner in which the PCF network element sends the updated PCC rule to the MCF network element, refer to the first implementation and the third implementation in S304. Details are not described herein again.

S404: The MCF network element sends, based on the updated PCC rule, multicast session update request to a first base station corresponding to a first multicast session of the multicast service.

The multicast session update request is used to request to update the first multicast session, and the multicast session update request includes an identifier of the first multicast session and update information of the first multicast session.

Optionally, the MCF network element may send the multicast session update request to the first base station by using an M-AMF network element.

It should be noted that the description in S202 is applicable to S404, and details are not described herein again.

After the MCF network element receives the updated PCC rule from the policy session, the MCF network element may determine to send the multicast session update request to the first base station.

Optionally, to save PCC signaling, when the MCF network element establishes a plurality of multicast sessions for a same multicast service on different first base stations, the MCF network element may create a policy session, and the MCF network element associates the plurality of multicast sessions with the policy session (makes the plurality of multicast sessions corresponding to the policy session). In this case, after receiving an updated PCC rule of the multicast service, the MCF network element sends the multicast session update request to the first base station corresponding to the plurality of multicast sessions corresponding to the policy session. If the MCF network element creates a policy session for each of the plurality of multicast sessions, the MCF network element may receive, from the plurality of policy sessions, the updated PCC rule sent by the PCF network element, and the MCF network element may update one multicast session corresponding to the plurality of policy sessions.

Optionally, the MCF network element may first determine the first base station, and then send the multicast session update request to the first base station. The MCF network element may determine the first base station in Manner 1 and Manner 3 in S305, and details are not described herein again. The MCF network element may send the multicast session update request to the first base station in the second implementation and the third implementation in S305, and details are not described herein again.

S405: The first base station obtains, based on a context of the multicast session, an identifier of a terminal device that joins the multicast session.

It should be noted that for an execution process of S405, refer to the execution process of S203. Details are not described herein again.

S406: The first base station determines radio bearer information.

S407: The first base station sends the radio bearer information to the terminal device.

It should be noted that for execution processes of S406 and S407, refer to execution processes of S307 and S308. Details are not described herein again.

S408: The first base station sends a first response message to the MCF network element.

The first response message may be a response message of the first base station for the multicast session update request.

Optionally, the first response message may include an update result for the multicast session. For example, the update result is used to indicate whether the multicast session is successfully updated.

Optionally, the first base station may send the first response message to the MCF network element by using the M-AMF network element.

S409: The MCF network element modifies a rule on an MUF network element based on the PCC rule.

Optionally, the MCF network element may modify a PDR, a QER, a URR, and the like on the MUF network element.

Optionally, in S407 and S408, if the base station fails to modify radio bearer information of a specific terminal device or fails to send modified radio bearer information to the terminal device, the base station may send an N2 message to an SMF network element corresponding to a PDU session of the terminal device, where the N2 message is used to notify the SMF network element that a multicast session of the terminal device fails to be updated. For example, when the terminal device receives the multicast service from the base station in a unicast manner, if a unicast resource fails to be allocated to the terminal device based on a QoS parameter of a new multicast service, and the terminal device is not suitable for receiving the multicast service in a multicast manner, the base station may send the N2 message to the SMF network element corresponding to the PDU session of the terminal device, to notify the SMF network element that the multicast session of the terminal device fails to be updated.

In the embodiment shown in FIG. 4, after the multicast service information of the multicast service is updated, the PCF network element may generate the updated PCC rule based on the updated multicast service information, and send the updated PCC rule to the MCF network element, so that the MCF network element sends the multicast session update request to the base station, and the base station sends, based on the update information in the multicast session update request, the radio bearer information to the terminal device that joins the multicast session. In this way, the terminal device that joins the multicast session can obtain latest radio bearer information corresponding to the multicast session, so that the terminal device can obtain service data from a network side in a multicast manner based on the latest radio bearer information, thereby improving resource utilization.

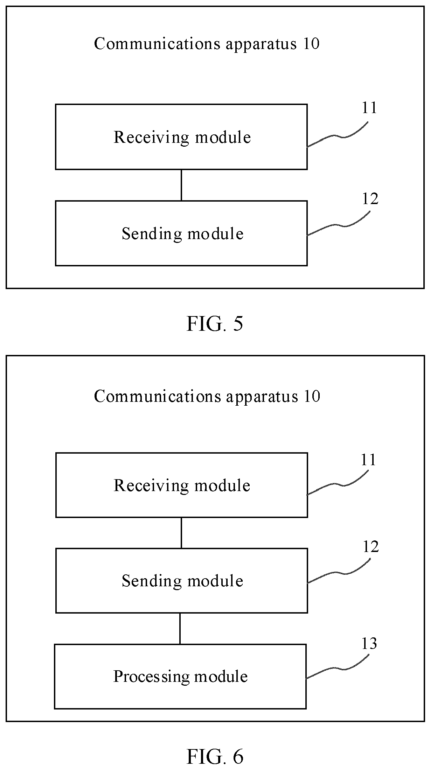

FIG. 5 is a schematic diagram of a structure of a communications apparatus according to an embodiment of this application. The communications apparatus 10 may be disposed in a base station. Referring to FIG. 5, the communications apparatus 10 may include a receiving module 11 and a sending module 12.

The receiving module 11 is configured to receive update information of a multicast session.

The sending module 12 is configured to send, based on the update information, radio bearer information to a terminal device that joins the multicast session, where the radio bearer information is used by the terminal device to receive data of the multicast session.

Optionally, the receiving module 11 may perform S202 in the embodiment in FIG. 2, S305 in the embodiment in FIG. 3, and S404 in the embodiment in FIG. 4.

Optionally, the sending module 12 may perform S203 in the embodiment in FIG. 2, S308 in the embodiment in FIG. 3, and S407 in the embodiment in FIG. 4. It should be noted that the sending module 12 may further perform sending-related steps in the foregoing method embodiments. For example, the sending module 12 may further perform S309 in the embodiment in FIG. 3 and S408 in the embodiment in FIG. 4.

It should be noted that the communications apparatus may further include a processing module 13, and the receiving module 11 and the sending module 12 may work under control of the processing module 13.

It should be noted that the communications apparatus shown in this embodiment of this application may perform the technical solutions shown in the foregoing method embodiments. Implementation principles and beneficial effects of the communications apparatus are similar those of the method embodiments, and details are not described herein again.

FIG. 6 is a schematic diagram of another structure of a communications apparatus according to an embodiment of this application. Based on the embodiment shown in FIG. 5, referring to FIG. 6, the communications apparatus 20 further includes a processing module 13.

The processing module 13 is configured to learn, based on a context of the multicast session, of the terminal device that joins the multicast session.

In a possible implementation, the update information includes one or more of the following information:
QoS information of a multicast quality of service QoS flow newly added to the multicast session and an identifier of the newly added multicast QoS flow; or
an identifier of a multicast QoS flow deleted from the multicast session; or
QoS information of an updated multicast QoS flow in the multicast session and an identifier of the updated multicast QoS flow.

In a possible implementation, the radio bearer information includes at least one of the following information:
configuration information of a newly added radio bearer; or
an identifier of a deleted radio bearer; or
configuration information of a modified radio bearer.

In a possible implementation, the configuration information of the newly added radio bearer includes an identifier of the newly added radio bearer and an identifier of a QoS flow mapped to the newly added radio bearer.

In a possible implementation, the configuration information of the modified radio bearer includes an identifier of the modified radio bearer and an identifier of a QoS flow mapped to the modified radio bearer.

In a possible implementation, when the update information includes the QoS information of the multicast QoS flow newly added to the multicast session and the identifier of the newly added multicast QoS flow, the radio bearer information includes the configuration information of the newly added radio bearer and/or the configuration information of the modified radio bearer.

In a possible implementation, when the update information includes the identifier of the multicast QoS flow deleted from the multicast session, the radio bearer information includes the identifier of the deleted radio bearer and/or the configuration information of the modified radio bearer.

In a possible implementation, when the update information includes the QoS information of the updated multicast QoS flow in the multicast session and the identifier of the updated multicast QoS flow, the radio bearer information includes at least one of the configuration information of the newly added radio bearer, the identifier of the deleted radio bearer, or the configuration information of the modified radio bearer.

In a possible implementation, the processing module 13 is further configured to determine a context of the terminal device based on an identifier of the terminal device that joins the multicast session.

The sending module 12 is further configured to send the radio bearer information to the terminal device based on the context of the terminal device and the update information.

In a possible implementation, the sending module 12 is further configured to send, to a session management function SMF network element, indication information used to indicate that the multicast session is successfully updated or indication information used to indicate that the multicast session of the terminal device fails to be updated.

It should be noted that the communications apparatus shown in this embodiment of this application may perform the technical solutions shown in the foregoing method embodiments. Implementation principles and beneficial effects of the communications apparatus are similar those of the method embodiments, and details are not described herein again.

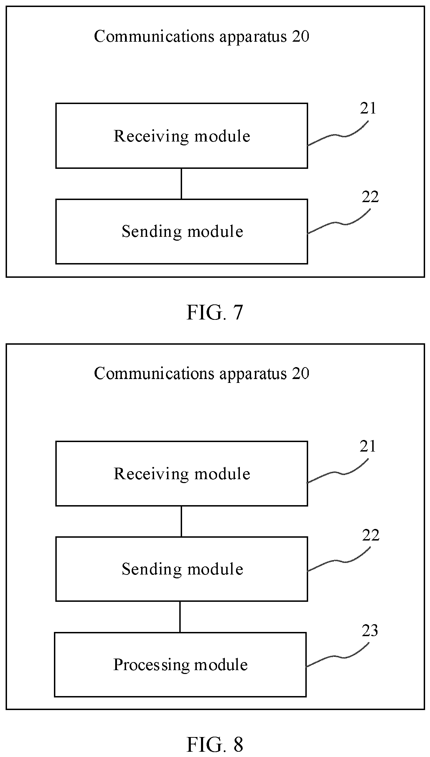

FIG. 7 is a schematic diagram of still another structure of a communications apparatus according to an embodiment of this application. The communications apparatus 20 may be disposed in a network device. For example, the network device may be an SMF network element or an MCF network element. Referring to FIG. 7, the communications apparatus 20 may include a receiving module 21 and a sending module 22.

The receiving module 21 is configured to receive an updated policy and charging control PCC rule of a multicast service.

The sending module 22 is configured to send, to a first base station corresponding to a first multicast session of the multicast service, update information of the first multicast session based on the updated PCC rule.

Optionally, the receiving module 21 may perform S304 in the embodiment in FIG. 3 and S403 in the embodiment in FIG. 4. It should be noted that the receiving module 21 may further perform receiving-related steps in the foregoing method embodiments. For example, the receiving module 21 may further perform S309 in the embodiment in FIG. 3 and S408 in the embodiment in FIG. 4.

Optionally, the sending module 22 may perform S202 in the embodiment in FIG. 2, S305 in the embodiment in FIG. 3, and S404 in the embodiment in FIG. 4. It should be noted that the sending module 22 may further perform sending-related steps in the foregoing method embodiments. For example, the sending module 22 may further perform S310 and S311 in the embodiment in FIG. 3.

It should be noted that the communications apparatus 20 may further include a processing module 23, and the receiving module 21 and the sending module 22 may work under control of the processing module 23.

It should be noted that the communications apparatus shown in this embodiment of this application may perform the technical solutions shown in the foregoing method embodiments. Implementation principles and beneficial effects of the communications apparatus are similar those of the method embodiments, and details are not described herein again.

In a possible implementation, the first multicast session corresponds to a plurality of base stations, the plurality of base stations further include a second base station, and the sending module 22 is further configured to send the update information of the first multicast session to the second base station.

In a possible implementation, the update information includes at least one of the following information:
QoS information of a multicast quality of service QoS flow newly added to the first multicast session and an identifier of the newly added multicast QoS flow; or
an identifier of a multicast QoS flow deleted from the first multicast session; or
QoS information of an updated multicast QoS flow in the first multicast session and an identifier of the updated multicast QoS flow.

In a possible implementation, the receiving module 21 is specifically configured to:
receive the updated PCC rule by using a first policy session corresponding to the first multicast session.

FIG. 8 is a schematic diagram of yet another structure of a communications apparatus according to an embodiment of this application. Based on the embodiment shown in FIG. 7, referring to FIG. 8, the communications apparatus 20 may further include a processing module 23.

The network device is a session management function SMF network element.

The receiving module 21 is further configured to receive the updated PCC rule by using a second policy session, where the second policy session corresponds to a protocol data unit PDU session of a terminal device, and the terminal device joins the first multicast session.

The processing module 23 is configured to determine, based on the PDU session, the first base station corresponding to the first multicast session.

In a possible implementation, the receiving module 21 is specifically configured to receive the updated PCC rule by using a third policy session, where the third policy session corresponds to a multicast session of the multicast service, and the multicast session includes the first multicast session.

In a possible implementation, the multicast session of the multicast service further includes a second multicast session, and the sending module 22 is further configured to send update information of the second multicast session to a third base station corresponding to the second multicast session.

In a possible implementation, the network device is an SMF network element or a multicast control function MCF network element.

In a possible implementation, the receiving module 21 is further configured to receive, from the first base station, indication information used to indicate that the first multicast session is successfully updated or indication information used to indicate that the first multicast session fails to be updated.

It should be noted that the communications apparatus shown in this embodiment of this application may perform the technical solutions shown in the foregoing method embodiments. Implementation principles and beneficial effects of the communications apparatus are similar those of the method embodiments, and details are not described herein again.

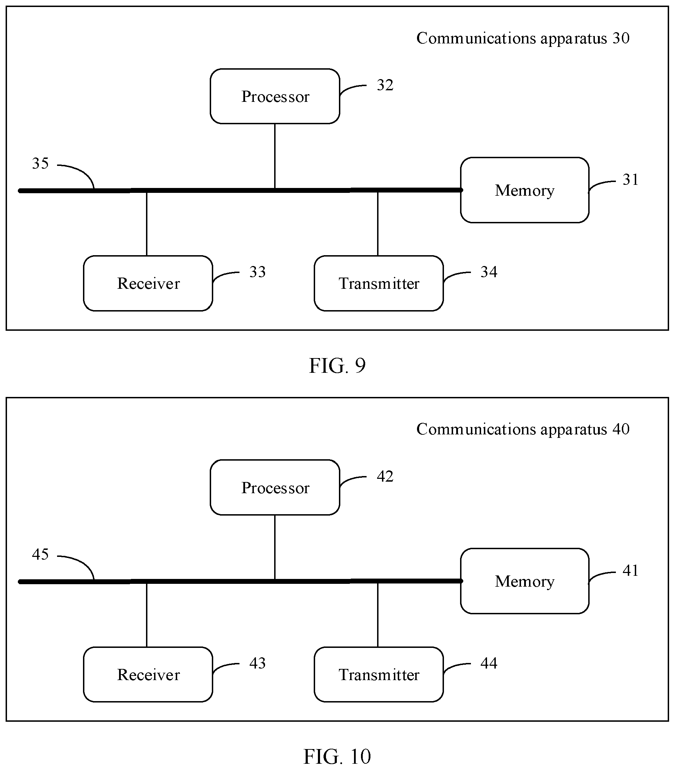

FIG. 9 is a schematic diagram of a hardware structure of a communications apparatus according to this application. Refer to FIG. 9. The communications apparatus 30 includes a memory 31, a processor 32, a receiver 33, and a transmitter 34, where the memory 31 communicates with the processor 32. For example, the memory 31, the processor 32, the receiver 33, and the transmitter 34 may communicate with each other through a communications bus 35. The memory 31 is configured to store a computer program, and the processor 32 executes the computer program to implement the foregoing communications method.

Optionally, the receiver 33 shown in this application may implement a function of the receiving module 11 in the embodiments in FIG. 5 and FIG. 6. The transmitter 34 may implement a function of the sending module 12 in the embodiments in FIG. 5 and FIG. 6. The processor 32 may implement a function of the processing module 13 in the embodiment in FIG. 6. Details are not described herein again.

Optionally, the processor may be a central processing unit (Central Processing Unit, CPU), or may be another general purpose processor, a digital signal processor (Digital Signal Processor, DSP), an application-specific integrated circuit (Application-Specific Integrated Circuit, ASIC), or the like. The general purpose processor may be a microprocessor, or the processor may be any conventional processor or the like. Steps in the communications method embodiments disclosed with reference to this application may be directly performed and accomplished by a hardware processor, or may be performed and accomplished by a combination of hardware and a software module in the processor.

FIG. 10 is a schematic diagram of a hardware structure of a communications apparatus according to this application. Refer to FIG. 10. The communications apparatus 40 includes a memory 41, a processor 42, a receiver 43, and a transmitter 44, where the memory 41 communicates with the processor 42. For example, the memory 41, the processor 42, the receiver 43, and the transmitter 44 may communicate with each other through a communications bus 45. The memory 41 is configured to store a computer program, and the processor 42 executes the computer program to implement the foregoing communications method.

Optionally, the receiver 43 shown in this application may implement a function of the receiving module 21 in the embodiments in FIG. 7 and FIG. 8. The transmitter 44 may implement a function of the sending module 22 in the embodiments in FIG. 7 and FIG. 8. The processor 42 may implement a function of the processing module 23 in the embodiment in FIG. 8. Details are not described herein again.

Optionally, the processor may be a central processing unit (Central Processing Unit, CPU), or may be another general purpose processor, a digital signal processor (Digital Signal Processor, DSP), an application-specific integrated circuit (Application-Specific Integrated Circuit, ASIC), or the like. The general purpose processor may be a microprocessor, or the processor may be any conventional processor or the like. Steps in the communications method embodiments disclosed with reference to this application may be directly performed and accomplished by a hardware processor, or may be performed and accomplished by a combination of hardware and a software module in the processor.

An embodiment of this application provides a readable storage medium. The storage medium is configured to store a computer program, and the computer program is used to implement the communications method described in the foregoing embodiment.

An embodiment of this application provides a communications system, and the communications system includes a base station (the communications apparatus shown in FIG. 5 or FIG. 6 is disposed in the base station) and a network device (the communications apparatus shown in FIG. 7 or FIG. 8 is disposed in the network device).

An embodiment of this application provides a computer program product. The computer program product includes instructions; and when the instructions are executed, a computer is enabled to perform the foregoing communications method.

An embodiment of this application provides a system-on-a-chip or system chip. The system-on-a-chip or system chip may be applied to a base station. The system-on-a-chip or system chip includes at least one communications interface, at least one processor, and at least one memory. The communications interface, the memory, and the processor are interconnected by using a bus. The processor executes instructions stored in the memory, so that the base station can perform the foregoing communications method.

An embodiment of this application provides a system-on-a-chip or system chip. The system-on-a-chip or system chip may be applied to a network device (for example, an SMF network element or an MCF network element). The system-on-a-chip or system chip includes at least one communications interface, at least one processor, and at least one memory. The communications interface, the memory, and the processor are interconnected by using a bus. The processor executes instructions stored in the memory, so that the network device can perform the foregoing communications method.

All or some of the steps in the foregoing method embodiments may be implemented by a program instructing relevant hardware. The foregoing program may be stored in a readable memory. When the program is executed, the steps in the foregoing method embodiments are performed. The memory (storage medium) includes: a read-only memory (English: read-only memory, ROM for short), a RAM, a flash memory, a hard disk, a solid-state drive, a magnetic tape (English: magnetic tape), a floppy disk (English: floppy disk), an optical disc (English: optical disc), and any combination thereof.

Embodiments of this application are described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processing unit of another programmable data processing device to generate a machine, so that instructions executed by the computer or the processing unit of the another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to embodiments of this application without departing from the scope of this application. In this way, this application is intended to cover these modifications and variations of embodiments of this application provided that they fall within the scope of the claims of this application.

In this application, the term "include" and variations thereof may mean non-limitative inclusion; and the term "or" and variations thereof may mean "and/or". In this application, the terms "first", "second", and the like are intended to distinguish between similar objects but do not necessarily indicate a specific order or sequence. In this application, "a plurality of" means two or more than two. The term "and/or" describes an association relationship between associated objects and represents that three relationships may exist. For example, A and/or B may represent the following three cases: Only A exists, both A and B exist, and only B exists. The character "/" generally indicates an "or" relationship between associated objects.

## Claims

1. A communications method, **characterized by** comprising:
receiving (S201), by a network device, an updated policy and charging control, PCC, rule of a multicast service; and
sending (S202), by the network device to a first base station corresponding to a first multicast session of the multicast service, update information of the first multicast session based on the updated PCC rule; and
**characterized in that**
the receiving, by a network device, an updated PCC rule of a multicast service comprises:
receiving, by the network device, the updated PCC rule by using a third policy session, wherein the third policy session corresponds to a multicast session of the multicast service, and the multicast session comprises the first multicast session, wherein the third policy session is in a one-to-one correspondence with the multicast session or wherein the third policy session is created for the multicast service.

2. The method according to claim 1, wherein the first multicast session corresponds to a plurality of base stations, the plurality of base stations further comprise a second base station, and the method further comprises:
sending, by the network device, the update information of the first multicast session to the second base station.

3. The method according to any of claims 1-2, wherein the multicast session of the multicast service further comprises a second multicast session, and the method further comprises:
sending, by the network device, update information of the second multicast session to a third base station corresponding to the second multicast session.

4. The method according to any one of claims 1 to 3, wherein the network device is an SMF network element or a multicast control function, MCF, network element.

5. The method according to any one of claims 1 to 4, wherein the network device is an SMF network element, and the method further comprises:
receiving, by the network device from the first base station, indication information used to indicate that the first multicast session is successfully updated or indication information used to indicate that the first multicast session fails to be updated.

6. A communications apparatus, comprising a memory and a processor, wherein the processor executes program instructions in the memory to implement the communications method according to any one of claims 1 to 5.

7. A computer-readable storage medium, wherein the storage medium is configured to store a computer program; and when executed by a computer or a processor, the computer program is used to implement the communications method according to any one of claims 1 to 5.

## Patentansprüche

1. Kommunikationsverfahren, **dadurch gekennzeichnet, dass** es umfasst:
Empfangen (S201), durch ein Netzwerkgerät, einer aktualisierten Richtlinien- und Ladesteuerung- bzw. PCC-Regel eines Rundsendedienstes, und
Senden (S202), durch das Netzwerkgerät an eine erste Basisstation korrespondierend mit einer ersten Rundsendesitzung des Rundsendedienstes, von Aktualisierungsinformationen der ersten Rundsendesitzung basierend auf der aktualisierten PCC-Regel; und
**dadurch gekennzeichnet, dass**
das Empfangen, durch ein Netzwerkgerät, einer aktualisierten PCC-Regel eines Rundsendedienstes umfasst:
Empfangen, durch das Netzwerkgerät, der aktualisierten PCC-Regel unter Verwendung einer dritten Richtliniensitzung, wobei die dritte Richtliniensitzung mit einer Rundsendesitzung des Rundsendedienstes korrespondiert und die Rundsendesitzung die erste Rundsendesitzung umfasst, wobei die dritte Richtliniensitzung in einer Eins-zu-eins-Korrespondenz mit der Rundsendesitzung ist oder wobei die dritte Richtliniensitzung für den Rundsendedienst erzeugt wird.

2. Verfahren nach Anspruch 1, wobei die erste Rundsendesitzung mit einer Vielzahl von Basisstationen korrespondiert, die Vielzahl von Basisstationen ferner eine zweite Basisstation umfasst und das Verfahren ferner umfasst:
Senden, durch das Netzwerkgerät, der Aktualisierungsinformationen der ersten Rundsendesitzung an die zweite Basisstation.

3. Verfahren nach einem der Ansprüche 1-2, wobei die Rundsendesitzung des Rundsendedienstes ferner eine zweite Rundsendesitzung umfasst und das Verfahren ferner umfasst:
Senden, durch das Netzwerkgerät, von Aktualisierungsinformationen der zweiten Rundsendesitzung an eine dritte Basisstation korrespondierend mit der zweiten Rundsendesitzung.

4. Verfahren nach einem der Ansprüche 1 bis 3, wobei das Netzwerkgerät ein SMF-Netzwerkelement oder ein Rundsendesteuerfunktion- bzw. MCF-Netzwerkelement ist.

5. Verfahren nach einem der Ansprüche 1 bis 4, wobei das Netzwerkgerät ein SMF-Netzwerkelement ist und das Verfahren ferner umfasst:
Empfangen, durch das Netzwerkgerät von der ersten Basisstation, von Angabeinformationen, die verwendet werden, anzugeben, dass die erste Rundsendesitzung erfolgreich aktualisiert wurde, oder Angabeinformationen, die verwendet werden, anzugeben, dass die erste Rundsendesitzung nicht aktualisiert wurde.

6. Kommunikationsvorrichtung, umfassend einen Speicher und einen Prozessor, wobei der Prozessor Programmanweisungen in dem Speicher ausführt, um das Kommunikationsverfahren nach einem der Ansprüche 1 bis 5 zu implementieren.

7. Computerlesbares Speichermedium, wobei das Speichermedium konfiguriert ist, ein Computerprogramm zu speichern; und das Computerprogramm, wenn es durch einen Computer oder einen Prozessor ausgeführt wird, verwendet wird, das Kommunikationsverfahren nach einem der Ansprüche 1 bis 5 zu implementieren.

## Revendications

1. Procédé de communication, **caractérisé en ce qu'**il comprend :
la réception (S201), par un dispositif de réseau, d'une règle de commande de politique et de charge, PCC, mise à jour d'un service de multidiffusion ; et
l'envoi (S202), par le dispositif de réseau à une première station de base correspondant à une première session de multidiffusion du service de multidiffusion, d'informations de mise à jour de la première session de multidiffusion sur la base de la règle PCC mise à jour ; et
**caractérisé en ce que**
la réception, par un dispositif de réseau, d'une règle PCC mise à jour d'un service de multidiffusion comprend :
la réception, par le dispositif de réseau, de la règle PCC mise à jour en utilisant une troisième session de politique, la troisième session de politique correspondant à une session de multidiffusion du service de multidiffusion, et la session de multidiffusion comprenant la première session de multidiffusion, la troisième session de politique étant en correspondance biunivoque avec la session de multidiffusion ou la troisième session de politique étant créée pour le service de multidiffusion.

2. Procédé selon la revendication 1, la première session de multidiffusion correspondant à une pluralité de stations de base, la pluralité de stations de base comprenant en outre une deuxième station de base, et le procédé comprenant en outre :
l'envoi, par le dispositif de réseau, des informations de mise à jour de la première session de multidiffusion à la deuxième station de base.

3. Procédé selon l'une quelconque des revendications 1 et 2, la session de multidiffusion du service de multidiffusion comprenant en outre une deuxième session de multidiffusion, et le procédé comprenant en outre :
l'envoi, par le dispositif de réseau, d'informations de mise à jour de la deuxième session de multidiffusion à une troisième station de base correspondant à la deuxième session de multidiffusion.

4. Procédé selon l'une quelconque des revendications 1 à 3, le dispositif de réseau étant un élément de réseau SMF ou un élément de réseau de fonction de commande de multidiffusion, MCF.

5. Procédé selon l'une quelconque des revendications 1 à 4, le dispositif de réseau étant un élément de réseau SMF, et le procédé comprenant en outre :
la réception, par le dispositif de réseau en provenance de la première station de base, d'informations d'indication utilisées pour indiquer que la première session de multidiffusion a été mise à jour avec succès ou d'informations d'indication utilisées pour indiquer que la première session de multidiffusion n'a pas été mise à jour.

6. Appareil de communication, comprenant une mémoire et un processeur, le processeur exécutant des instructions de programme dans la mémoire pour mettre en oeuvre le procédé de communication selon l'une quelconque des revendications 1 à 5.

7. Support de stockage lisible par ordinateur, le support de stockage étant configuré pour stocker un programme informatique ; et lorsqu'il est exécuté par un ordinateur ou un processeur, le programme informatique étant utilisé pour mettre en oeuvre le procédé de communication selon l'une quelconque des revendications 1 à 5.
